(19) **Europäisches Patentamt / European Patent Office / Office européen des brevets**

(11) **EP 3 391 295 B1**

(12) # EUROPEAN PATENT SPECIFICATION

(45) Date of publication and mention
of the grant of the patent:
**15.03.2023 Bulletin 2023/11**

(21) Application number: **16808699.9**

(22) Date of filing: **09.12.2016**

(51) International Patent Classification (IPC):
**G06N 5/00** (2006.01)   **G06N 5/02** (2006.01)
**G06N 20/00** (2019.01)   **H04M 3/24** (2006.01)
**H04M 3/30** (2006.01)

(52) Cooperative Patent Classification (CPC):
**H04M 3/247; G06N 5/01; G06N 5/025; G06N 20/00; H04M 3/304**

(86) International application number:
**PCT/EP2016/080503**

(87) International publication number:
**WO 2017/102601 (22.06.2017 Gazette 2017/25)**

(54) **AUTONOMIC METHOD FOR MANAGING A COMPUTING SYSTEM**

VERFAHREN ZUR FESTSTELLUNG EINER ÄNDERUNG IM BETRIEB EINES AUTONOMEN ALGORITHMUS

PROCÉDÉ POUR DÉTECTER UN CHANGEMENT DANS LE MODE OPERATOIRE D'UN ALGORITHME AUTONOME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2015 EP 15201213**

(43) Date of publication of application:
**24.10.2018 Bulletin 2018/43**

(73) Proprietor: **British Telecommunications public limited company**
**London E1 8EE (GB)**

(72) Inventors:
• **JENSEN, Kjeld**
  **London EC4V 5BT (GB)**
• **VIRGINAS, Botond**
  **London EC4V 5BT (GB)**
• **CASSIDY, Stephen**
  **London EC4V 5BT (GB)**
• **ROHLFING, David**
  **London EC4V 5BT (GB)**
• **BULL, Phil**
  **London EC4V 5BT (GB)**

(74) Representative: **British Telecommunications public limited company**
**Intellectual Property Department**
**9th Floor**
**One Braham**
**Braham Street**
**London E1 8EE (GB)**

(56) References cited:
**US-A1- 2014 304 408**

• **IRRERA IVANO ET AL: "A Practical Approach for Generating Failure Data for Assessing and Comparing Failure Prediction Algorithms", 2014 IEEE 20TH PACIFIC RIM INTERNATIONAL SYMPOSIUM ON DEPENDABLE COMPUTING, IEEE, 18 November 2014 (2014-11-18), pages 86-95, XP032696953, DOI: 10.1109/PRDC.2014.19**
• **FELIX SALFNER ET AL: "A survey of online failure prediction methods", ACM COMPUTING SURVEYS, vol. 42, no. 3, March 2010 (2010-03), pages 1-42, XP055055937, ISSN: 0360-0300, DOI: 10.1145/1670679.1670680**

## Description

**Field of the Invention**

The present invention relates to a computer-implemented method for detecting a change in an autonomic algorithm.

**Background**

Computing systems have been used widely for decades as programmable devices for performing certain processes. These processes typically involve an algorithm acting on an input (e.g. data) to produce an output (e.g. a decision). The algorithm is typically created manually by a human operative.

For each process that must be managed by a computing system, a human operative must act in a supervisory role to ensure that the algorithm is fit for purpose, such that any output is commensurate to the input and satisfying any business requirements. If the operative determines that the algorithm is not suitable for any reason, then he or she must determine what modifications are necessary and then manually make these changes. This is a time-consuming and difficult job. Accordingly, the field of autonomic computing emerged to address this.

An autonomic process is one in which the computing system manages a particular algorithm. The autonomic process may therefore make modifications to the algorithm by utilising machine learning processes, which act on operational data for the computing system and generate algorithm modifications which are optimised according to specified performance criteria.

The present invention relates to improvements in the field of autonomic methods for managing multi-user computing systems.

US Patent Application Publication No. 2014/304408 A1 discloses a method of collecting data from the one or more communication units; generating a policy, for each of the one or more communication units, based on the collected data; and sending the policy to each of the one or more communication units, wherein the policy comprises conditions for operation of the one or more communication units, wherein the one or more communication units implement the policy according to time-varying data.

## Summary of the Invention

According to a first aspect of the invention, there is provided an autonomic method as claimed in Claim 1.

In embodiments of the invention, a computing system may detect when a rate of rule generation for an algorithm in an autonomic process exceeds a threshold. This typically indicates that the process has entered an unstable state as rules are being generated at a relatively high rate. Accordingly, the computing system may therefore report the occurrence in a change in the algorithm's operation, which may be acted upon either manually (by the system operator) or automatically (e.g. to revert back to an earlier state of the algorithm).

The method may further comprise the steps of: monitoring the rate of generation of new rules for the algorithm and comparing said rate to a first and second threshold; and if the rate is less than the second threshold, report the occurrence of a change in the algorithm's operation. The first threshold may represent a maximum rate of change for the algorithm, and the second threshold may represent a minimum rate of change for the algorithm. Thus, the computing system may detect whether the autonomic process is within an acceptable range of stability.

The monitoring step may include monitoring the rate of generation of new rules for the algorithm. Alternatively, if the machine learning algorithm uses a contingency matrix to generate a new rule for the algorithm, the monitoring step may include monitoring the rate of change in the confusion matrix.

In another aspect there is provided a non-transitory computer-readable storage medium storing a computer program or suite of computer programs which upon execution by a computer system performs the method of the first aspect of the invention.

There is also provided a computing apparatus comprising an input/output interface for receiving diagnostic data relating to a multi-user computing system, and a processor for carrying out the first aspect of the invention.

## Brief Description of the Figures

In order that the present invention may be better understood, embodiments thereof will now be described, by way of example only, with reference to the accompanying drawings in which:

Figure 1 is a schematic diagram illustrating a computing system of an embodiment of the present invention;
Figure 2 is a schematic diagram illustrating the computing system of Figure 1 in a multi-user telecommunications environment;
Figure 3 is a flow diagram of a method implemented by the computing system of Figure 1 in an embodiment of a method of the present invention;
Figure 4 is a flow diagram illustrating a step of the flow diagram of Figure 3; and
Figure 5 includes several graphs representing data of an example of Figure 4.

**Detailed Description of Embodiments**

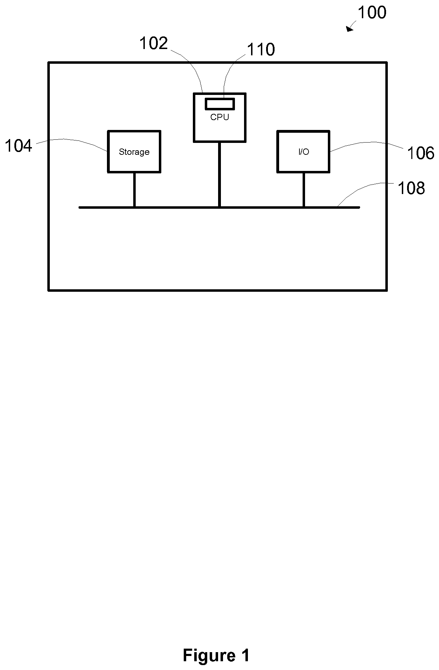

Figure 1 is a block diagram of a computer system 100 suitable for the operation of embodiments of the present invention. A central processor unit (CPU) 102 is communicatively connected to storage 104 and an input/output (I/O) interface 106 via a data bus 108. The storage 104 can be any read/write storage device such as a random access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

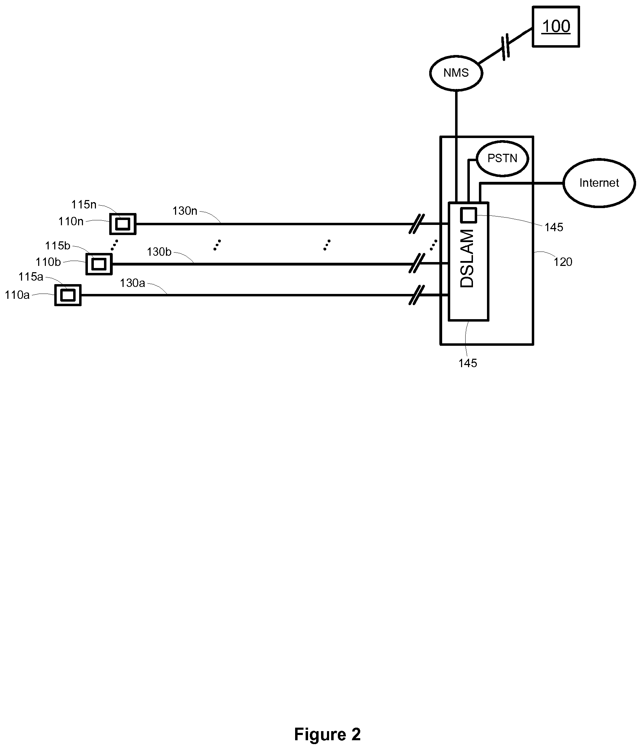

Figure 2 illustrates the computer system 100 in a multi-terminal telecommunications environment 1 of an embodiment of the present invention. The telecommunications system 1 includes a plurality of Customer Premises Equipment (CPE) 110a... 110n connected to an exchange 120, each via a copper pair 130a...130n. The copper pair may use any one of the family of xDSL protocols, such as ADSL, VDSL, VDSL2, G.fast, etc, and may also pass through a further DSL element such as a street cabinet and/or distribution point. Furthermore, the connection between the CPEs and the exchange may be carried in part or in full by an optical fibre connection. To cover all scenarios, the term "line" will hereinafter be used to describe any suitable connection between the CPEs 110a...110n and the exchange 120. In the exchange, the lines 130a...130n terminate at an aggregation transceiver device, in this example a Digital Subscriber Line Access Multiplier (DSLAM) 140, which is configured to provide Internet and telephony services to each CPE via each copper pair. The DSLAM thus provides onward connections to the Internet, to a PSTN, and to a Network Management System (NMS).

The CPEs 110a...110n and DSLAM 140 all include a control unit 115a...115n, 145, which are configured to measure certain properties of a modem located in the CPE or DSLAM, or the associated line, and store them in memory. In this embodiment, the control units 115a...115n, 145 are configured to store DSL-related parameters such as Signal to Noise Ratio (SNR), SNR margin, error counts, retrain counts, etc., which are stored in 15-minute bins in the Management Information Base (MIB). In this embodiment, the control units 115a...115n, 145 are also configured to store non-DSL-related parameters such as the line's resistance, moisture levels, etc., which are also stored in memory. Furthermore, each line 130a...130n may include a further control unit (not shown), provided at any point along its length, which is also configured to perform measurements of the various DSL-related and non-DSL-related parameters noted above.

The various control units 115a...115n, 145, 160a...160n are all configured to report their stored DSL-related and non-DSL-related parameters to the NMS. In this embodiment, the NMS receives this data once per day and each day's data is stored, creating a timeline of operational data for subsequent analysis. The NMS typically analyses the DSL-related part of this data in order to optimise the multi-terminal telecommunications system via Dynamic Line Management (DLM) procedures.

In an embodiment of the present invention, the computer system 100 is configured to retrieve this data from the NMS and store it as a vector of quantities, hereinafter designated '$x$'. The computer system 100 uses data $x$ in an autonomic process to control the telecommunications system 1. A detailed example of one such autonomic process will now be described in detail. The skilled person will note, however, that the telecommunications system 1 is just one example of a multi-terminal computing system and the various aspects and embodiments of the invention described hereinafter are applicable to any multi-user computing system.

In the multi-terminal telecommunications system 1, a user of one CPE may terminate their service with the Network Operator. The user's line may remain inactive, or the user may be switched to a service provided by another Network Operator (where the telecommunications system is unbundled and services can be provided by several Network Operators along the same copper pair). In any case, the user may want to request that their service be provided again by the original Network Operator. As some time has passed since the original Network Operator served that user via that line, the Network Operator must decide whether to a) automatically restart the service without sending out an engineer, or b) send an engineer out to inspect the line and associated infrastructure and manually restart it. There is a greater chance of the developing a fault with option a) over option b), and such a fault would have a negative impact on the customer experience. However, there is a greater financial cost associated with option b) over option a). Accordingly, the Network Operator must make a decision on which lines it would be beneficial to use option a) over option b).

In this embodiment, an algorithm is used to decide whether the Network Operator should automatically restart the service or send an engineer to manually restart it. This algorithm may take into account, for example, the amount of time that has passed since the Network Operator terminated service to that user, DSL fault statistics of neighbouring lines, and the various DSL-related and non-DSL-related data noted above. The algorithm thus takes the stored diagnostic data x as an input and outputs either option a) or option b).

The Network Operator may then act upon this output. With either option a) or option b), there are two possible outcomes. One option is a success, which in this example means that the service is successfully restarted without a fault occurring in the near future. The second option is a failure, in which the service does not successfully restart and enters a fault state either immediately or shortly after restarting. One characteristic of this system is that the probabilities of success and failure when choosing option a), i.e. to automatically restart the service rather than sending an engineer, are correlated with the data x. However, the probabilities of success and failure when choosing option b), i.e. to send an engineer to manually restart the line, are not correlated with the data x. The aim therefore is to optimise the algorithm as a function of x, which predicts how likely option a) is in succeeding and base the decision whether to opt for option a) or b) depending on policy criteria specifying what constitutes an acceptable proportion of failures.

The present invention relates to a computer system 100 implementing an autonomic process which, in this embodiment, is configured to manage the above algorithm. There are several methods adopted by the computer system 100 (which may be implemented in any combination or individually), which will now be explained. The first method relates to the process of modifying the algorithm within operator controlled operating limits.

Section 1: Modifying an Algorithm of an Autonomic Process

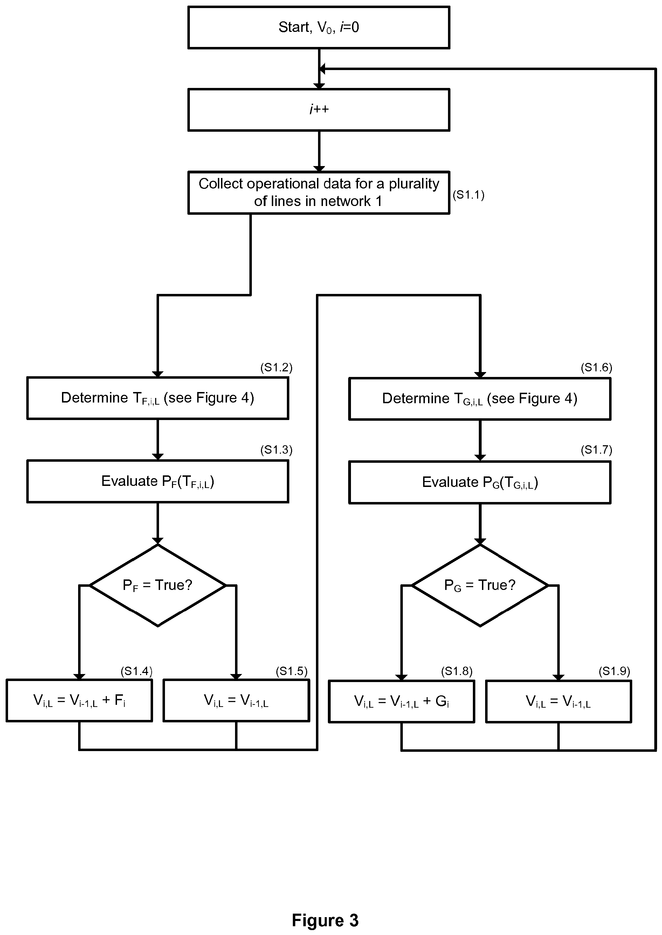

The autonomic process is configured to analyse stored diagnostic data x for the telecommunications system 1 (e.g. historical diagnostic data that has been collected at the NMS), and determine whether the current algorithm should be changed. An overview of the autonomic process will be described with reference to Figures 3 to 5.

In this embodiment, the autonomic process starts with an initial algorithm that has been manually created for deciding whether to automatically restart the service or send an engineer. The initial algorithm (hereinafter, "$V_0$") may be applied to the stored data x on the multi-terminal telecommunications system 1 and output a decision (option a) or option b)) for each line in the telecommunications system 1. In one example, the initial algorithm $V_0$ is based on the following:

> 1. Retrieve parameters V_AGEOFSTOP, V_DCVOLTAGEBE, V_DCVOTLAGEAB, V_CAPACITANCEBALANCE, V_U2DCPE, V1_DIS, V_NTSA, V_TOK-1, V_CAPACITANCEAB, V_DCCURRENTAB
> 2. Apply weightings to each parameter
> 3. Add each weighted parameter; and
> 4. If greater than a threshold, output decision a); if lower than a threshold, output decision b).

In the above algorithm, (in which the letters 'A' and 'B' are each representative of one copper wire in a pair forming a DSL), V_AGEOFSTOP is a value of the time elapsed since the DSL has been served by the Network Operator, V_DCVOLTAGEBE is a value of the DC voltage between B and Earth, V_DCVOLTAGEAB is a value representing the voltage between A and B, V_CAPACITANCEBALANCE is a value of the capacitance ratio of A to Earth and B to Earth, V_U2DCPE is a derived value based on the presence of a terminal at the end of the DSL, V1_DIS is a derived value based on the insulation resistance between A and B, V_NTSA is a derived value based on the number of terminals at the end of the DSL, V_TOK-1 is a derived value based on the resistance and capacitance of A and B, V CAPACITANCEAB is a value of the capacitance between A and B, and V_DCCURRENTAB is a value of the DC current between A and B.

In this embodiment, the autonomic process acting on the telecommunications system 1 adjusts the initial algorithm $V_0$ by the addition of a rule. However, the skilled person will understand that the initial algorithm $V_0$ may be modified by the addition or removal of a rule (e.g. adding or removing a particular parameter) or by the variance of an existing rule (e.g. by changing a weighting attributed to one or more parameters or by varying a threshold). The autonomic process implemented by computer system 100 uses a machine learning process to change the algorithm $V_0$ from its initial state to a new state. This is achieved in the following manner.

As a first step (Figure 3, step S1.1), the computing system 100 collects historical and current operational data x (i.e. DSL-related and non-DSL-related operational data) from the NMS via the I/O interface 106 for all lines in the telecommunications system 1. In this embodiment, the computing system 100 then develops the algorithm such that its initial state $V_0$ becomes the root node of a decision tree, and modifications to this initial state $V_0$ become branches from this root node. The algorithm is developed according to the following function:

$$V_{i,}(x_L) = \begin{cases} F_i(x_L), V_{i-1}(x_L) = (a) \\ G_i(x_L), V_{i-1}(x_L) = (b) \end{cases}$$

Thus, at each process instance i, the computing system 100 evaluates two possible modifications to the algo-

rithm, $F_i$ and $G_i$. These two modifications to the algorithm are generated by a machine learning process (explained below in section 1.3), and the modifications are added as branches to the decision tree if they pass the acceptance criteria. The algorithm may then be applied to any line in the telecommunications system 1, and the output of the final node in the decision tree is the algorithm output. Accordingly, following step S1.1, the computing system 100 evaluates a modification following an option a) assignment at the previous stage i-1. This will now be explained.

Section 1.1: Modification $F_i$, following an option a) assignment

In step S1.2, a machine learning process operates on the stored diagnostic data, $x$, to produce a candidate modification to the algorithm for that line, designated $T_{F,i}$, (this process is described in section 1.3, below). This modification is then tested against the policy-based criteria $a_{t,F}$, $s_{t,F}$, according to the following functions:

$$F_i(x_L) = \begin{cases} T_{F,i}(x_L), p_F(T_{F,i}) = true \\ 1, else \end{cases}$$

$$p_F(T_{F,i}) = \begin{cases} true, A_F(T_{F,i}) > a_{t,F} \text{ and } S_F(T_{F,i}) > s_{t,F} \\ false, else \end{cases}$$

Accordingly, the computing system 100 applies the algorithm including this candidate modification to the stored diagnostic data x in order to generate a set of predicted outcomes if option a) is chosen for all lines in the multi-terminal telecommunications system 1. These predictions may then be evaluated to determine the values of the following contingency matrix:

| Test $p_F$ | Actual Success | Actual Failure |
|---|---|---|
| Predict Success | $C_{11}$ | $C_{12}$ |
| Predict Failure | $C_{21}$ | $C_{22}$ |

These values are determined by analysing the historical diagnostic data and by using known characteristics of this data. That is, if a particular line is predicted a success using the algorithm with the candidate modification (which was the same result as in the previous stage *i*-1 of the algorithm), then the historical diagnostic data may be analysed to determine if that line was successfully restarted or whether it failed following an automatic restart in order to determine values $c_{11}$ or $c_{12}$ respectively. If the particular line is predicted to fail using the algorithm with the candidate modification, then the values of $c_{21}$ and $c_{22}$ may be estimated since these values do not depend on the diagnostic data $x$ (i.e. a particular percentage of these lines are either successes or failures regardless of their conditions as defined in the diagnostic data).

The computing system 100 may then define values $A_F$ and $S_F$:

$$A_F = \frac{c_{22}}{c_{21} + c_{22}}$$

$$S_F = \frac{c_{21} + c_{22}}{c_{11} + c_{12} + c_{21} + c_{22}}$$

In this embodiment, the first performance criterion, $A_F$, quantifies how accurately the algorithm including the candidate modification can predict failures, whilst the second performance criterion, $S_F$, is a proportion of instances in the historical diagnostic data that are predicted to generate failures. These performance criteria aim to find a subset of lines having a current prediction of option a) which should be reclassified as option b) with a suitably high accuracy.

Once the computing system 100 has determined the values for $A_F$ and $S_F$, it may then evaluate $p_F(T_{F,i})$ (step S1.3). If $p_F(T_{F,i})$ is true (i.e. $A_F$ and $S_F$ satisfy the Network Operator defined performance thresholds) then the candidate modification to the algorithm is accepted (step S1.4). Conversely, if $p_F(T_{F,i})$ is false (i.e. $A_F$ and $S_F$ do not satisfy the Network Operator defined performance thresholds), then the candidate modification is rejected (step S1.5).

To summarise, a candidate algorithm modification $T_{F,i}$ is generated based on a subset of the historical data. A set of predicted outcomes for a plurality of lines is then generated based on another subset of the historical data. If these predictions satisfy certain accuracy and sensitivity performance criteria, then the algorithm including the candidate modification is accepted. The algorithm is thus modified to introduce a new branch to the decision tree, in which the new leaf node is the algorithm including the modification. If the algorithm including the candidate modification does not satisfy the accuracy and sensitivity criteria, then the candidate modification is rejected. The algorithm is thus modified to introduce a new branch to the decision tree, in which the new leaf node is the unmodified algorithm (i.e. the same as the previous algorithm).

Once the modification has been applied or rejected, the computing system 100 then evaluates a modification following an option b) assignment at the previous stage *i*-1. This will now be explained.

Section 1.2: Modification $G_i$, following an option b) assignment

Following the determination of one branch node in steps S1.4 and S1.5, the computing system then determines whether a modification according to function $G_i$ (see step S1.6). Before going into detail, a brief background on how the data is generated for this determination will be explained.

In section 1.1, it was possible to evaluate the performance of a candidate modification to the algorithm for lines in which the previous state of the algorithm output option a), as the stored historical data may be analysed to determine whether these instances were successes or failures following the automatic restart of the line. However, if the decision from the previous state of the algorithm was option b), then when the operator acted upon this decision resulting in an engineer being sent out and the line manually restarted. In this case, it is not possible to determine what would have happened if option a) had been decided instead. This section details the process when the previous state of the algorithm for a particular line returns option b).

At each process instance, the decision at following an evaluation of $V_i$ may be either option a) or option b). A proportion of the lines which have decision of option b) are entered into a 'trial', in which they may be reclassified as option a) depending on the analysis described below. In doing so, the computing system 100 generates a source of enriched data for later analysis. The selection of lines put forward for a trial may be based on a random selection, or may be geographically or temporally based. Thus, for a line which at stage i-1 was assigned option b), and that line has been allocated to the trial, then option a) is taken instead and the process loops back round to step s1.1. For these lines (hereinafter known as 'trial lines'), the lines are automatically restarted and the success or failure of this event is recorded. Accordingly, this data may be used in the following iteration of the process.

Returning to the method as shown in Figure 3, the computing system then uses a machine learning process on the stored diagnostic data, x, to produce a candidate modification to the algorithm, $T_{G,i}$ (as explained in section 1.3), which is then evaluated according to the following functions:

$$G_i(x_L) = \begin{cases} T_{G,i}(x_L), p_G(T_{G,i}) = true \\ 2, else \end{cases}$$

$$p_G(T_{G,i}) = \begin{cases} true, A_G(T_{G,i}) > a_{t,G} \ and \ S_G(T_{G,i}) > s_{t,G} \\ false, else \end{cases}$$

As the trial lines were previously re-assigned as option a) and were automatically restarted, it is now possible to evaluate, based on this historical operational data, whether the algorithm including the candidate modification would be successful or a failure based on this data. Accordingly, the computing system 100 applies the algorithm including the candidate modification to the subset of historical data relating to the lines participating in the trial to produce the following values:

| Test $p_F$ | Actual Success | Actual Failure |
|---|---|---|
| Predict Success | $d_{11}$ | $d_{12}$ |
| Predict Failure | $d_{21}$ | $d_{22}$ |

Thus, by forcing a reassignment of these trial lines into the trial, we are able to evaluate performance criteria for lines which would otherwise be impossible. The performance criteria are defined as:

$$A_G = \frac{d_{11}}{d_{11} + d_{12}}$$

$$S_G = \frac{d_{11} + d_{12}}{d_{11} + d_{12} + d_{21} + d_{22}}$$

In this embodiment, the first performance criterion, $A_G$, quantifies how accurately the algorithm including the candidate modification can predict successes, whilst the second performance criterion, $S_G$, is a proportion of instances in the historical diagnostic data that are predicted to succeed. These performance criteria therefore aim to find a subset of lines within the trial having a current prediction of option b) which should be reclassified as option a) with a suitably high accuracy. The computing system 100 may therefore evaluate $p_G(T_{G,i})$ in step S1.7, and, if the performance criteria meet the thresholds, then the candidate modification is accepted. If so, then a second branch is added in the decision tree, stemming from the node representing the previous algorithm, and the new leaf node represents the algorithm including the modification (step S1.8). If not, then the candidate modification is rejected, in which (in step S1.9) the case a second branch is added in the decision tree, stemming from the node representing the previous algorithm, and the new leaf node represents the unmodified algorithm (i.e. the same as the previous algorithm).

Once the modifications $F_i$ and $G_i$ have been applied or rejected, then algorithm $V_i$ can be applied to all lines and a decision of option a) or option b) can be determined. The Network Operator may then act upon this determination.

The above processes detailed in sections 1.1 and 1.2 are performed at stage $i$. The new algorithm at stage $i$ is stored in memory, and the process loops back and repeats at a later time.

Section 1.3: Generating the candidate algorithms

As noted above, the candidate modifications to the algorithms (either $F_{i,L}$ or $G_{i,L}$, depending on the decision at the previous stage of the process) are generated using a machine learning process. This may be via any classification model that is compatible with the structure of the data vector, $x$. The modelling methodology used in the present embodiment is based on a classification tree algorithm, $H$ (sometimes known as a decision tree). The particular classification tree algorithm may be, for example, those used in "Classification and regression trees", Breiman, L., Friedman, J., Olshen, R, Stone, C. (1984); "Data mining with decision trees: theory and applications", "Rokach, L., Maimon, O. (2008); or "Induction of Decision Trees. Machine Learning 1"; Quinlan, J. (1986).

One of the inputs to the classification tree algorithm $H$ when generating a candidate modification to the autonomic process algorithm is known as a 'penalty matrix', $z$, such that $H(z)$. The penalty matrix of this embodiment of the invention is based on the following table:

| Penalty Matrix | Actual Success | Actual Failure |
|---|---|---|
| Predict Success | 0 | 1 |
| Predict Failure | z | 0 |

The penalty matrix assigns penalties to misclassifications (i.e. misclassifying whether a DSL may be successfully automatically restarted or not). The penalties for correctly predicting either a success or a failure are therefore 0, and the relative penalties of misclassifying a line as a success or a failure are designated 1 or $z$ respectively. It is the ratio of these two misclassifications that is important, so only a single adjustable parameter $z$ is necessary. Accordingly, if $z$ is increased, misclassification of failures count more strongly than misclassifications of successes in the classification tree algorithm when generating candidate modifications, $T_{F,i}$, $T_{G,i}$. This encourages a tendency towards generating modifications which classify fewer lines as failures, but with a higher prediction accuracy. Conversely, if $z$ is decreased, the classification tree algorithm generates candidate modifications, $T_{F,i}$, $T_{G,i}$, which encourage more failure predictions but with a lower accuracy.

In this embodiment of the invention, the computing system 100 implements an iterative process in order to determine a value for $z$ (that is, the input into the classification tree algorithm to generate the new candidate modification, $T_{F,i}$, $T_{G,i}$) which provides a suitable compromise between the two performance criteria. Thus, for each instance of $F_i$ or $G_i$ above (i.e. when generating a new candidate modification for each algorithm for each line at instance $i$), the computing system 100 searches for a suitable value of $z$ by evaluating:

$$z_{k+1} = z_k - g_a(A_{F,G} - a_{t,F,G}) + g_s(S_{F,G} - s_{t,F,G})$$

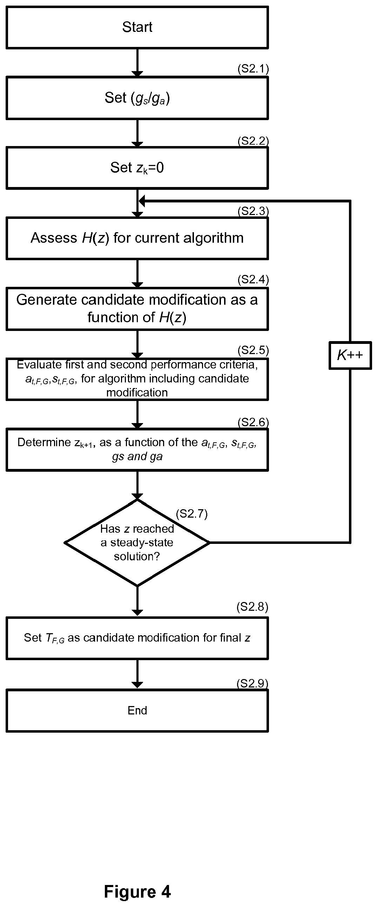

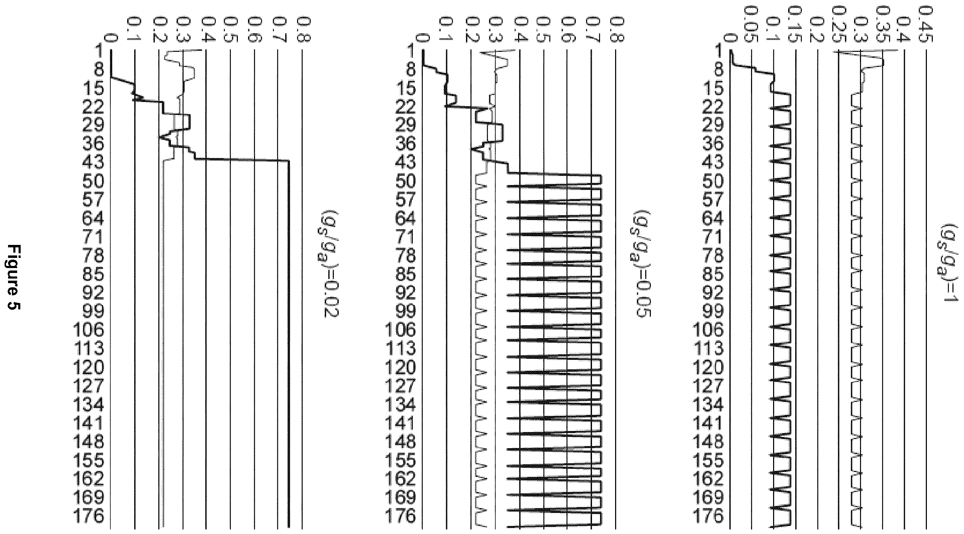

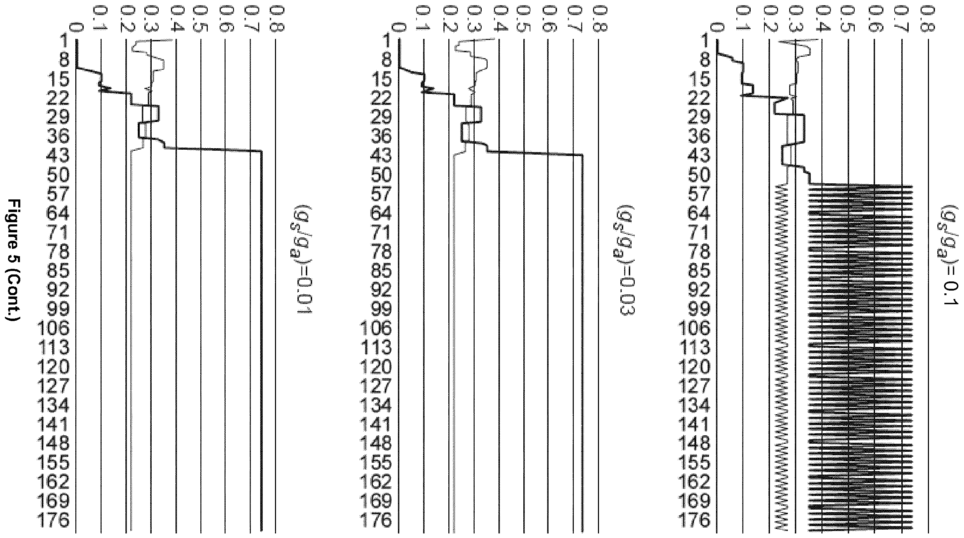

This iterative process will now be explained with reference to Figures 4 and 5. In step S2.1 of a first iteration of the process, the value of a ratio of the two 'gearing' parameters ($g_s/g_a$) in the above parameters is set to, for example, 0.03 (the determination of a suitable ratio of these gearing parameters is explained below). According to the above equation, these gearing parameters determine how much the penalty parameter $z$ should be changed in successive iterations of the process when the actual values for $A_{F,G}$ and $S_{F,G}$ differ from performance criteria thresholds. Furthermore, in step S2.2, the value for $z_k$ is set to 0 for the first iteration of $k$.

As shown in Figure 4, in each iteration of $k$, the computing system 100 assesses $H(z_k)$ for the current algorithm (section 2.3), and generates a candidate modification to the algorithm based on H($z_k$) (step S2.4). The computing system 100 then generates a set of predicted outcomes by applying the algorithm including the candidate modification to a subset of diagnostic data, $x$, and determines values for the first and second performance criteria for the current candidate modification (step S2.5). The differences between these two values for the performance criteria and the operator's thresholds a$_{t,F,G}$, s$_{t,F,G}$, multiplied by their respective gearing parameters $g_a$ and $g_s$, determine the new value for $z_{k+1}$ according to the above equation (step S2.6). In step S2.7, the computing system 100 determines whether the process has reached a steady-state solution (e.g. by determining whether $z_{k+1}$ is substantially equal to $z_k$). If not, then the process loops back to step S2.3 and the computing system 100 repeats the above process using a new value for $z_k$.

The gearing parameters therefore determine how much the penalty parameter $z$ should be changed in each iteration of $k$ when the actual values for $A_{F,G}$ and $S_{F,G}$ differ from performance thresholds. Thus, if $A_{F,G} < a_{t,F,G}$ then the term $g_a(A_{F,G} - a_{t,F,G})$ in the above equation will increase the penalty for misclassifying failures, which in the next iteration of $k$ should increase $A_{F,G}$. Similarly, if $S_{F,G} < s_{t,F,G}$, then the term $g_s(S_{F,G} - s_{t,F,G})$ in the above equation will increase the number of lines predicted to fail, which in the next iteration of $k$ should increase $S_{F,G}$.

Thus, after several iterations, the computing system 100 arrives at a steady-state solution in which $z_{k+1}$ is equal to or substantially equal to $z_k$. At this point, the following equation applies:

$$\frac{A_{F,G} - a_{F,G}}{S_{F,G} - s_{F,G}} = \frac{g_s}{g_a}$$

The modification to the algorithm generated once the value for $z$ had reached such a steady-state becomes the candidate modification, $T_{F,G}$, in step S2.8 to be evaluated as described in sections 1.1 and 1.2 above.

As noted above, the ratio of the gearing parameters $g_s/g_a$ is important as it determines how much the penalty parameter $z$ should be changed in each iteration of $k$ when the actual values for $A_{F,G}$ and $S_{F,G}$ differ from performance thresholds. In an enhancement to the above method, the computing system 100 determines what gearing ratio to use. Accordingly, in an initial tuning process (which doesn't result in a new candidate modification to the algorithm but is merely designed to find a suitable gearing parameter), the above process is repeated for a plurality of different ratios of gearing parameters, of g$_s$/g$_a$ = 0.01, 0.02, 0.03, 0.05, 0.1 and 1. The values of A$_{F,G}$ - a$_{F,G}$ and S$_{F,G}$ - s$_{F,G}$ at each instance of k for the above ratios are shown in the various graphs of Figure 5. As is clear, when the ratio of gearing parameters is too high, at 0.05, 0.1 or 1, the iterative process cannot find a steady state solution as the values rise and fall sharply across several iterations. However, for several other ratios of gearing parameters, namely 0.03, 0.02 and 0.01, the iterative process finds a steady state solution.

In this embodiment, the computing system 100 selects the greatest gearing ratio which returns a steady-state solution (e.g. 0.03) as the gearing ratio to use when generating candidate modifications to the algorithm. Thus, after this initial tuning process, the gearing ratio has been selected and candidate modifications may be generated and evaluated in each iteration of i.

This initial tuning process ensures that machine learning process is able to arrive at a candidate modification within a suitable time period (i.e. within a suitable number of iterations of $k$).

In a further enhancement, the gearing ratio may be re-determined periodically using the same process but on more recent operational data. This ensures that the gearing ratio is appropriate to the current operating environment. However, this is non-essential. It is still possible, although not optimal, for the computing system 100 to generate candidate modifications based on a gearing ratio which does not find a steady-state solution.

The above processes set a framework for adapting an algorithm of an autonomic process having certain performance criteria. This framework ensures that any modifications to the algorithm are within the limits imposed by the performance criteria thresholds. The skilled person will also understand that the above method may be "retrofitted" to current non-learning algorithms, such that a machine learning process is applied and the algorithm is improved within certain performance criteria.

Section 2: Monitoring Algorithm Learning Times

In this section, the computing system 100 includes a monitoring function 110 (implemented by processor 102) which is adapted to determine the rate of change of the algorithm of the autonomic process. The following method may be implemented in isolation of the method of section 1, but for consistency, an embodiment based on this method will now be described.

As noted in section 1, an initial algorithm $V_0$ is adapted once an acceptable candidate modification has been identified and evaluated. The initial algorithm is stored in memory with a corresponding timestamp, $t_0$. In the first iteration of the process, $i=1$, candidate modifications (F and G) are evaluated and modifications accepted or rejected. At a later time at iteration $i=2$, further candidate modifications are evaluated and modifications accepted or rejected. At each iteration, the computer system 100 records the result of the process, together with a timestamp recording the time the process was carried out relative to the initial timestamp $t_0$.

At some point in time, a change is introduced to the multi-terminal telecommunications system 1. This change may be by the Network Operator changing one or more of the performance criteria thresholds, or in another example a change to the data set (e.g. the addition of a new metric) being collected. These changes are not necessarily recorded by the computing system 100, but their effects on the rate of change of the algorithm can be monitored. In this embodiment, the computing system 100 is adapted to determine the rate of change of the algorithm based on the time differences between iterations resulting in an acceptance of a modification to the algorithm. The computing system 100 stores the most recent value for the rate of change for the algorithm in memory 104.

There are several ways in which the computing system 100 may use this determined rate of change of the algorithm to improve the algorithm. Some examples will now be discussed in the following sections.

Section 2.1: First Example

In this example, the computing system 100 uses a first rate of change threshold being a maximum rate of change for an algorithm. The monitoring function 100 therefore determines the rate of change for the algorithm and determines if of this rate exceeds this first threshold. If so, the computing system 100 records this event in memory 104.

The occurrence of this type of event indicates that the algorithm is no longer stable as it is being modified on a relatively frequent basis. In this case, the computing system 100 may re-adjust the first two performance criteria (noted in section 1) in order to increase the likelihood of finding an acceptable solution and thus prevent the algorithm from being modified too frequently.

In this example, the computing system 100 also uses a second rate of change threshold being a minimum rate of change for an algorithm. The monitoring function 100 therefore determines the rate of change for the algorithm and determines if this rate does not meet this lower threshold. If so, the computing system 100 records this event in memory 104.

The occurrence of this type of event indicates that the algorithm is too stable and thus not optimising itself. Again, the computing system 100 may re-adjust the first two performance criteria (noted in section 1) in order to increase the likelihood of finding an acceptable solution and thus encourage the algorithm to modify and improve itself.

The use of thresholds for the rate of change of the algorithms can therefore be used to detect an error in the autonomic process (that is, that the algorithm is no longer working within safe operating limits). The computing system 100 may then react to this determination, such as by changing the algorithm back to a previous state or by changing the performance criteria thresholds.

In this example, the computing system 100 can react to these events in an autonomous manner, or alternatively they may be reported to a human operative (e.g. via I/O interface 106) for any necessary changes.

Section 2.2: Second Example

In this second example, the computing system 100 uses the determined rate of change of the algorithm as an additional performance criterion. The computing system 100 may therefore determine whether to accept or reject a candidate modification based on the criteria noted in section 1 and also depending on the measured rate of change. In an enhancement of this concept, the computing system 100 implements two independent algorithms for the multi-terminal telecommunications system 1. The computing system 100 may use one of these algorithms to decide whether to automatically restart the line or to send out an engineer (i.e. the operating algorithm), whilst the other algorithm is run in parallel in a virtual manner (i.e. the virtual algorithm). These algorithms may be both modified by the autonomic process described in section 1, and the rate of change for both algorithms may be monitored and recorded.

By running a second virtual algorithm, the computing system 100 is able to monitor the rate of change of both and thus determine which is more suitable to changing conditions in the network. For example, if the operating algorithm (i.e. the algorithm that is actually making decisions) is being modified at a rate which is greater or lower than the maximum or minimum rate of change respectively, but the virtual algorithm is within these limits, then the computing system 100 may react to the changing conditions by making the virtual algorithm the new operating algorithm.

Section 2.4 Third Example

It is non-essential that the computing system 100 monitors the rate of change of the algorithm in order to determine whether it is suitable to the current operating conditions of the network. In a further embodiment, the computing system's monitoring function 110 is further adapted to monitor the values of the contingency matrix generated by the computing system 100 when creating candidate modifications to the algorithm. Thus, in a more general sense, the computing system 100 may monitor a rate of change relating to the generation of new rules for the algorithm. The example of monitoring the values of the contingency matrix will now be described.

As noted in section 1, the computing system 100 evaluates a candidate modification $F_i/G_i$ based on a function $p_{F,G}(T_{F,G,i})$ to determine whether it should be accepted or not. This function tests the algorithm including the candidate modification against some historical data to generate a set of predictions, and these are compared to real world results. This results in a contingency matrix, reproduced below:

| Test $p_{F,G}$ | Actual Success | Actual Failure |
|---|---|---|
| Predict Success | $c_{11}, d_{11}$ | $c_{12}, d_{12}$ |
| Predict Failure | $c_{21}, d_{21}$ | $c_{22}, d_{22}$ |

The computing system 100 is configured to record these values at each iteration $i$, together with a timestamp for that process $i$. The monitoring function 110 of the computing system may then determine whether a rate of change for any one of these values is above/below a threshold, and then use such a determination in same manner as in section 2.2 or 2.3 above.

In this embodiment, the computing system 100 records the values of $c_{12}$, $d_{12}$ (i.e. the number of false negatives) together with a timestamp at each instance of $i$. The computing system 100 then evaluates a distance metric between the previous algorithm and the algorithm including the candidate modification based on the following formula:

$$D_x = \frac{c_{1,2}, d_{1,2}}{c_{1,1}, d_{1,1} + c_{1,2}, d_{1,2} + c_{2,1}, d_{2,1} + c_{2,2}, d_{2,2}}$$

The computing system 100 may then compare the rate of change of this distance metric over time to one or more thresholds. For example, it may compare the rate of change of this distance metric to a maximum and minimum threshold in order to determine whether the algorithm is too stable or no longer stable. It may also be used as an alarm to determine if an error has occurred.

Section 2.5 Fourth Example

In this fourth example, the monitoring function 110 of the computing system 100 is configured to monitor the magnitude of any change (rather than the rate of change) between iterations of the algorithm. In this embodiment, the magnitude of change is determined as the value of the distance metric, $D_x$, as defined in the above equation. This value may then be compared with operator set thresholds for maximum (and perhaps minimum) distance metrics in order to determine whether the algorithm is too stable or no longer stable, and used as an alarm if it is determined that an error has occurred. In an enhancement to this embodiment, the monitoring function 110 of the computing system 100 monitors both the rate and magnitude of change relating to the generation of new rules for the algorithm.

The changes to the operating environment of the multi-terminal telecommunications system 1 may be completely external changes that the Network Operator has no control over or knowledge of. However, these changes may be known and purposively used by the Network Operator in order to improve the autonomic process. For example, a substantial change could be introduced to the operating conditions in order to determine if the operating algorithms are suitably reactive (e.g. whether they are passing the minimum rate of change threshold) and, if they are not, then the computing system 100 may determine that a switch to a different algorithm should be made. These tests may also be used by an operative of the computing system 100 to determine whether to change any performance criteria (e.g. as noted in section 1), which may have become too difficult to achieve in a new operating environment.

Furthermore, it is possible for the computing system 100 to apply the above methods (of monitoring changes in the contingency matrix) to determine whether a non-learning algorithm is still fit for purpose. For example, any change in the contingency matrix (e.g. a rate of change and/or a magnitude of change being above/below certain thresholds) may indicate that the algorithm is no longer suitable for the current operating environment. This may be used as a trigger for an operator to review the algorithm.

The above embodiments are applied to a particular algorithm operating on a multi-terminal computing system. However, the skilled person will understand that the algorithm may apply to other forms of computing systems. For example, a data centre may comprise a number of resources which are either operational or dormant. The data centre operator may then decide on whether to automatically deploy the dormant resource to a user, or whether to manually review and configure the resource for deployment. Data may be collected for the data centre (covering, for example, the length of time since the resource was last used and/or operational data) and an algorithm may be used to make the above decision. A machine-learning process may be used to develop the algorithm, and any modifications may be accepted based on operator-defined performance criteria. This autonomic process may therefore benefit from the advantages of the present invention.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

**Claims**

1. A computer-implemented method for detecting a change in an autonomic algorithm operating on a multi-terminal telecommunications system (100), the method comprising the steps of:

   receiving operational data on the multi-terminal telecommunications system (100);
   generating a new rule for the algorithm, on a periodic basis, using a machine learning process based on the operational data, wherein, at each iteration of the periodic rule generation, the generated new rule is evaluated for acceptance or rejection, and, if the new rule has been accepted, the new rule is added to the algorithm, and, wherein, at each iteration of the periodic rule generation, a version of the algorithm is recorded together with a corresponding timestamp; and
   monitoring a rate relating to the generation of new rules for the algorithm based on time differences between a first and second version of the algorithm and comparing said rate to a first rate threshold, and/or
   monitoring a magnitude of a change between the first and second versions of the algorithm by evaluating a distance metric for said versions based on contingency matrices, and comparing said magnitude to a first magnitude threshold; and,
   if the rate exceeds the first rate threshold and/or the magnitude exceeds the first magnitude threshold,
   report the occurrence of a change in the algorithm's operation if the rate exceeds the first rate threshold, and/or
   report an occurrence of an error in the algorithm's operation if the magnitude is compared with a threshold for maximum and/or minimum distance metrics in order to determine whether the algorithm is too stable or no longer stable,
   wherein the reporting of the occurrence of a change is performed via an input/output interface (106) and the reported occurrence indicates to a human operative that the algorithm is no longer suitable for the current operating conditions of the telecommunications system (100).

2. A computer-implemented method as claimed in Claim 1, further comprising the steps of:

   monitoring the rate relating to the generation of new rules for the algorithm and
   comparing said rate to the first rate threshold and a second rate threshold; and if the rate is less than the second rate threshold,
   report the occurrence of a change in the algorithm's operation.

3. A computer-implemented method as claimed in Claim 2, wherein the first rate threshold represents a maximum rate for the algorithm, and the second rate threshold represents a minimum rate for the algorithm.

4. A non-transitory computer-readable storage medium storing a computer program or suite of computer programs which upon execution by a computer system performs the method of any one of the preceding claims.

5. A computing apparatus comprising:

an input/output interface (106) configured to receive operational data on the multi-terminal telecommunications system (100), and
a processor (102) configured to:

generate a new rule for the algorithm, on a periodic basis, using a machine learning process based on the operational data, wherein, at each iteration of the periodic rule generation, the generated new rule is evaluated for acceptance or rejection, and, if the new rule has been accepted, the new rule is added to the algorithm, and, wherein, at each iteration of the periodic rule generation, a version of the algorithm is recorded together with a corresponding timestamp; and
monitor a rate relating to the generation of new rules for the algorithm based on time differences between a first and second version of the algorithm and comparing said rate to a first rate threshold, and/or
monitor a magnitude of a change between the first and second versions of the algorithm by evaluating a distance metric for said versions based on contingency matrices generated when creating the new rules for the first and second versions of the algorithm, and comparing said magnitude to a first magnitude threshold; and,
if the rate exceeds the first rate threshold and/or the magnitude exceeds the first magnitude threshold, cause the input/output interface (106) to report the occurrence of a change in the algorithm's operation if the rate exceeds the first rate threshold, and/or cause the input/output interface (106) to report an occurrence of an error in the algorithm's operation if the magnitude is compared with a threshold for maximum and/or minimum distance metrics in order to determine whether the algorithm is too stable or no longer stable, wherein the reported occurrence indicates to a human operative that the algorithm is no longer suitable for the current operating conditions of the telecommunications system (100).

**Patentansprüche**

1. Computerimplementiertes Verfahren zum Detektieren einer Änderung in einem autonomen Algorithmus, der auf einem Multi-Terminal-Telekommunikationssystem (100) in Betrieb ist, wobei das Verfahren die folgenden Schritte umfasst:

Empfangen von Betriebsdaten auf dem Multi-Terminal-Telekommunikationssystem (100);
Erzeugen einer neuen Regel für den Algorithmus in periodischen Abständen unter Verwendung eines Prozesses maschinellen Lernens auf Grundlage der Betriebsdaten, wobei bei jeder Iteration der periodischen Regelerzeugung die erzeugte neue Regel zur Annahme oder Ablehnung bewertet wird und, wenn die neue Regel angenommen wurde, die neue Regel dem Algorithmus hinzugefügt wird und wobei bei jeder Iteration der periodischen Regelerzeugung eine Version des Algorithmus zusammen mit einem entsprechenden Zeitstempel aufgezeichnet wird; und
Überwachen einer Rate, die die Erzeugung neuer Regeln für den Algorithmus betrifft, auf Grundlage von Zeitunterschieden zwischen einer ersten und einer zweiten Version des Algorithmus und Vergleichen der Rate mit einer ersten Ratenschwelle und/oder
Überwachen einer Größe einer Änderung zwischen der ersten und der zweiten Version des Algorithmus durch Auswerten einer Abstandsmetrik für die Versionen auf Grundlage von Kontingenzmatrizen und Vergleichen der Größe mit einer ersten Größenschwelle; und, wenn die Rate die erste Ratenschwelle übersteigt und/oder die Größe die erste Größenschwelle übersteigt,
Melden des Auftretens einer Änderung im Betrieb des Algorithmus, wenn die Rate die erste Ratenschwelle übersteigt, und/oder Melden eines Auftretens eines Fehlers im Betrieb des Algorithmus, wenn die Größe mit einer Schwelle für maximale und/oder minimale Abstandsmetriken verglichen wird, um zu bestimmen, ob der Algorithmus ausreichend stabil oder nicht mehr stabil ist,
wobei das Melden des Auftretens einer Änderung über eine Eingabe-/Ausgabeschnittstelle (106) durchgeführt wird und das gemeldete Auftreten einem menschlichen Bediener anzeigt, dass der Algorithmus nicht mehr für die derzeitigen Betriebsbedingungen des Telekommunikationssystems (100) geeignet ist.

2. Computerimplementiertes Verfahren nach Anspruch 1, das ferner die folgenden Schritte umfasst:

Überwachen der Rate, die die Erzeugung neuer Regeln für den Algorithmus betrifft, und
Vergleichen der Rate mit der ersten Ratenschwelle und einer zweiten Ratenschwelle; und, wenn die Rate kleiner als die zweite Ratenschwelle ist,
Melden des Auftretens einer Änderung im Betrieb des Algorithmus.

3. Computerimplementiertes Verfahren nach Anspruch 2, wobei die erste Ratenschwelle eine Maximalrate für den Algorithmus darstellt und die zweite Ratenschwelle eine Minimalrate für den Algorithmus darstellt.

4. Nichtflüchtiges computerlesbares Speichermedium, das ein Computerprogramm oder eine Computerprogrammsuite speichert, das/die bei Ausführung durch ein Computersystem das Verfahren nach einem der vorhergehenden Ansprüche durchführt.

5. Rechenvorrichtung, die aufweist:

eine Eingabe-/Ausgabeschnittstelle (106), die dazu ausgelegt ist, Betriebsdaten auf dem Multi-Terminal-Telekommunikationssystem (100) zu empfangen, und
einen Prozessor (102), der dazu ausgelegt ist:

eine neue Regel für den Algorithmus in periodischen Abständen unter Verwendung eines Prozesses maschinellen Lernens auf Grundlage der Betriebsdaten zu erzeugen, wobei bei jeder Iteration der periodischen Regelerzeugung die erzeugte neue Regel zur Annahme oder Ablehnung bewertet wird und, wenn die neue Regel angenommen wurde, die neue Regel dem Algorithmus hinzugefügt wird und wobei bei jeder Iteration der periodischen Regelerzeugung eine Version des Algorithmus zusammen mit einem entsprechenden Zeitstempel aufgezeichnet wird; und
eine Rate, die die Erzeugung neuer Regeln für den Algorithmus betrifft, auf Grundlage von Zeitunterschieden zwischen einer ersten und einer zweiten Version des Algorithmus zu überwachen und die Rate mit einer ersten Ratenschwelle zu vergleichen und/oder
eine Größe einer Änderung zwischen der ersten und der zweiten Version des Algorithmus durch Auswerten einer Abstandsmetrik für die Versionen auf Grundlage von Kontingenzmatrizen, die erzeugt werden, wenn die neuen Regeln für die erste und die zweite Version des Algorithmus erstellt werden, zu überwachen und die Größe mit einer ersten Größenschwelle zu vergleichen; und,
wenn die Rate die erste Ratenschwelle übersteigt und/oder die Größe die erste Größenschwelle übersteigt, zu bewirken, dass die Eingabe-/Ausgabeschnittstelle (106) das Auftreten einer Änderung im Betrieb des Algorithmus meldet, wenn die Rate die erste Ratenschwelle übersteigt, und/oder zu bewirken, dass die Eingabe-/Ausgabeschnittstelle (106) ein Auftreten eines Fehlers im Betrieb des Algorithmus meldet, wenn die Größe mit einer Schwelle für Maximal- und/oder Minimalabstandsmetriken verglichen wird, um zu bestimmen, ob der Algorithmus ausreichend stabil oder nicht mehr stabil ist,
wobei das gemeldete Auftreten einem menschlichen Bediener anzeigt, dass der Algorithmus nicht mehr für die derzeitigen Betriebsbedingungen des Telekommunikationssystems (100) geeignet ist.

**Revendications**

1. Procédé mis en œuvre par ordinateur pour détecter un changement dans un algorithme autonome fonctionnant sur un système de télécommunications à terminaux multiples (100), le procédé comprenant les étapes de :

réception de données opérationnelles sur le système de télécommunications à terminaux multiples (100) ;
génération d'une nouvelle règle pour l'algorithme, de manière périodique, à l'aide d'un processus d'apprentissage automatique basé sur les données opérationnelles, dans lequel, à chaque itération de la génération de règle périodique, la nouvelle règle générée est évaluée en vue de son acceptation ou son rejet, et, si la nouvelle règle a été acceptée, la nouvelle règle est ajoutée à l'algorithme, et, dans lequel, à chaque itération de la génération de règle périodique, une version de l'algorithme est enregistrée avec un horodatage correspondant ; et
surveillance d'un taux relatif à la génération de nouvelles règles pour l'algorithme en fonction de différences de temps entre une première et une deuxième version de l'algorithme et comparaison dudit taux à un premier seuil de taux, et/ou

surveillance d'une grandeur d'un changement entre les première et deuxième versions de l'algorithme en évaluant une métrique de distance pour lesdites versions selon des matrices de contingence, et comparaison de ladite grandeur à un premier seuil de grandeur ; et, si le taux dépasse le premier seuil de taux et/ou si la grandeur dépasse le premier seuil de grandeur,

signalisation de l'occurrence d'un changement dans le fonctionnement de l'algorithme si le taux dépasse le premier seuil de taux, et/ou signalisation de l'occurrence d'une erreur dans le fonctionnement de l'algorithme si la grandeur est comparée à un seuil de métriques de distance maximale et/ou minimale afin de déterminer que l'algorithme est trop stable ou n'est plus stable,

dans lequel la signalisation de l'occurrence d'un changement est réalisée par l'intermédiaire d'une interface d'entrée/sortie (106) et l'événement signalé indique à un opérateur humain que l'algorithme n'est plus adapté aux conditions actuelles de fonctionnement du système de télécommunications (100).

2. Procédé mis en œuvre par ordinateur selon la revendication 1, comprenant en outre les étapes de :

surveillance du taux relatif à la génération de nouvelles règles pour l'algorithme et comparaison dudit taux au premier seuil de taux et à un second seuil de taux ; et si le taux est inférieur au second seuil de taux, signalisation de l'occurrence d'un changement dans le fonctionnement de l'algorithme.

3. Procédé mis en œuvre par ordinateur selon la revendication 2, dans lequel le premier seuil de taux représente un taux maximal pour l'algorithme, et le second seuil de taux représente un taux minimum pour l'algorithme.

4. Support de stockage non transitoire lisible par ordinateur stockant un programme d'ordinateur ou une suite de programmes d'ordinateur qui, à leur exécution par un système informatique, met en œuvre le procédé selon l'une quelconque des revendications précédentes.

5. Appareil informatique comprenant :

une interface d'entrée/sortie (106) configurée pour recevoir des données opérationnelles sur le système de télécommunications à terminaux multiples (100) et un processeur (102) configuré pour :

générer une nouvelle règle pour l'algorithme, de manière périodique, à l'aide d'un processus d'apprentissage automatique basé sur les données opérationnelles, dans lequel, à chaque itération de la génération de règle périodique, la nouvelle règle générée est évaluée en vue de son acceptation ou son rejet, et, si la nouvelle règle a été acceptée, la nouvelle règle est ajoutée à l'algorithme, et dans lequel, à chaque itération de la génération de règle périodique, une version de l'algorithme est enregistrée avec un horodatage correspondant ; et

surveiller un taux relatif à la génération de nouvelles règles pour l'algorithme en fonction de différences de temps entre une première et une deuxième version de l'algorithme et comparer ledit taux à un premier seuil de taux, et/ou

surveiller une grandeur d'un changement entre les première et deuxième versions de l'algorithme en évaluant une métrique de distance pour lesdites versions selon des matrices de contingence générées lors de la création des nouvelles règles pour les première et deuxième versions de l'algorithme, et comparer ladite grandeur à un premier seuil de grandeur ; et

si le taux dépasse le premier seuil de taux et/ou si la grandeur dépasse le premier seuil de grandeur, amener l'interface d'entrée/sortie (106) à signaler l'occurrence d'un changement dans le fonctionnement de l'algorithme si le taux dépasse le premier seuil de taux, et/ou amener l'interface d'entrée/sortie (106) à signaler l'occurrence d'une erreur dans le fonctionnement de l'algorithme si la grandeur est comparée à un seuil de métriques de distance maximale et/ou minimale afin de déterminer que l'algorithme est trop stable ou n'est plus stable,

dans lequel l'événement signalé indique à un opérateur humain que l'algorithme n'est plus adapté aux conditions actuelles de fonctionnement du système de télécommunications (100).

100

102    110

104    Storage    CPU

I/O    106

108

**Figure 1**

**Figure 2**

Start, $V_0$, $i=0$

$i$++

Collect operational data for a plurality
of lines in network 1  (S1.1)

(S1.2)
Determine $T_{F,i,L}$ (see Figure 4)

(S1.6)
Determine $T_{G,i,L}$ (see Figure 4)

(S1.3)
Evaluate $P_F(T_{F,i,L})$

(S1.7)
Evaluate $P_G(T_{G,i,L})$

$P_F$ = True?

$P_G$ = True?

(S1.4)
$V_{i,L} = V_{i-1,L} + F_i$

(S1.5)
$V_{i,L} = V_{i-1,L}$

(S1.8)
$V_{i,L} = V_{i-1,L} + G_i$

(S1.9)
$V_{i,L} = V_{i-1,L}$

**Figure 3**

Figure 4

$(g_s/g_a)=1$

$(g_s/g_a)=0.05$

$(g_s/g_a)=0.02$

Figure 5

Figure 5 (Cont.)

**EP 3 391 295 B1**

## REFERENCES CITED IN THE DESCRIPTION

### Patent documents cited in the description

• US 2014304408 A1